# EUROPEAN PATENT APPLICATION

(11) **EP 4 683 372 A1**
(43) Date of publication of application: **21.01.2026**
(21) Application number: 24382782.1
(22) Date of filing: 18.07.2024
(51) Int. Cl.: H04W 24/02, H04W 48/18, H04L 41/40, H04L 41/022

(54) **MANAGEMENT OF MOBILE PRIVATE NETWORKS, MPN**

(71) Applicant: Vodafone Group Services Limited, Newbury, Berkshire RG14 2FN (GB)
(72) Inventor: VILLENA, Jose Emilio, London, W2 6BY (GB); MORENO-GOMEZ, Salvador, London, W2 6BY (GB); FOGBEL, Delson Dan, London, W2 6BY (GB)
(74) Representative: Boult Wade Tennant LLP

(57) **Abstract**

A system and method for management of one or more mobile private networks, MPNs, each MPN being implemented on a type of core network. The system comprises a management portal, at least one subscription data repository, and a microservices module. Each of the at least one subscription data repository is associated with a MPN of the one or more mobile private networks, MPNs, and the microservices module is in communication with the management portal and the at least one subscription data repository. The microservices module is configured to: receive from the management portal one or more generic command generated according to input from a user at the management portal, the input for management of a destination MPN of the one or more mobile private networks, MPNs; and translate the one or more generic command to one or more core network type-specific command, the one or more core network type-specific command being compatible with a type of core network on which the destination MPN is implemented. The microservices module is further configured to direct the one or more core network type-specific command to a subscription data repository of the at least one subscription data repository, the subscription data repository being a subscription data repository associated with the destination MPN.

## Description

### Field of the disclosure

A system for management of one or more mobile private network, MPNs, where each MPN is implemented on a type of core network. The system may be used for provisioning of SIMs accessing an MPN. Also described is a method for management of one or more mobile private networks, MPNs.

### Background to the disclosure

A Mobile Private Network (MPN) is a local telecommunication network with private coverage and/or reserved capacity, built to cover a specific location in order to deliver a more controlled and optimised service than compared to traditional data networks. MPNs are beneficial for providing an assured service level to users on the MPN, higher security, specified speed/capacity and/or connection density, as well as additional features such as Quality of Service (QoS) and Multi-Access Edge Computing (MEC). MPNs enable businesses to provide mission and business critical services, either in a local area (small scale at less than 200m radius, large scale at less than 1 km radius) or a larger area (even nationwide). In an example, MPN may be deployed within a geographical site of a healthcare facility, to provide reliable, customised and ring-fenced network provision to authorised personnel and equipment within the healthcare facility.

Each MPN requires management, including deployment of changes to the MPN as well as provisioning of SIMs to which the MPN is accessible. Typically, each MPN has its own management interface (which may be a web-based portal, but is often on-site), with rules for configuration that are specific to the particular type of core network on which the given MPN is implemented. The type of core network may depend on the vendor implementing the core network of the MPN ("core network vendor"), the technology type (LTE/4G/5G) of the core network or the software version running at the core network implementing the MPN. As the interface for management and configuration of each MPN may be different, and may each require separate input for reconfiguration, management is time consuming and can require particular skills and knowledge by the user.

As such, there is a desire for an improved method of management of mobile private networks (MPNs).

### Summary of the disclosure

The present disclosure describes a system and method which permits user input of instructions for management of one or more destination MPN in a way that is agnostic to the type of core network on which a destination MPN is implemented. The disclosed system and method translate the management instructions provided by a user to a set of management instructions that are compatible with the particular core-network type on which the destination MPN is implemented. The described system and method allow the management of MPN without specific knowledge by the user of the core-network type on which an MPN runs, and also allow management of multiple MPNs according to a single set of input management instructions. This reduces the complexity of management of a plurality of MPNs. Moreover, the described management portal may be a web-based portal having an interface showing consolidated views and metrics across multiple MPN, thereby providing more effective management of the MPN.

As noted in the 'Background' section above, in prior art systems each MPN typically is configured separately, having a separate interface for management. This is even the case where a single entity or company may be responsible for different MPN across different, geographically separate sites. The inventors have recognised that, as MPN at each site are often implemented on a different core network type, even if the same change is to be implemented at each MPN of a group of MPN, then each MPN must be managed and configured separately. This is time consuming and inefficient.

In contrast, the presently disclosed solution provides a centralised management portal for management of multiple MPN in a way that is core network type agnostic. In particular, the present disclosure provides a system and method for management of MPN which can be provided to a customer using a centrally hosted management platform or portal (for instance, hosted in Amazon Web Services (AWS)). Besides operational monitoring and control, the central management platform or portal also allows users to monitor and to some extent manage their MPN networks via a self-service web portal. Such management of the MPN network includes SIM provisioning and SIM management.

In a first aspect there is a system for management of one or more mobile private networks, MPNs, each MPN implemented on a type of core network, the system comprising:
a management portal;
at least one subscription data repository wherein each subscription data repository is associated with a MPN of the one or more mobile private networks, MPNs; and
a microservices module, in communication with the management portal and the at least one subscription data repository;
wherein the microservices module is configured to:
   receive from the management portal one or more generic command generated according to input from a user at the management portal, the input for management of a destination MPN of the one or more mobile private networks, MPNs;
   translate the one or more generic command to one or more core network type-specific command, the one or more core network type-specific command being compatible with a type of core network on which the destination MPN is implemented;
   direct the one or more core network type-specific command to a subscription data repository of the at least one subscription data repository, the subscription data repository being a subscription data repository associated with the destination MPN.

The management portal (or management plane) may be a centrally hosted, web-based client having a user interface for receiving user instructions or commands (for example, an Application Programming Interface, API, client). The user interface may also show consolidated information or metrics relevant to the plurality of MPN to be managed. As such, the management portal offers a convenient single point of access for management of a plurality of MPN.

The subscription data repository may be a network subscriber identity module, SIM, subscription data repository or may be a Home Subscriber Server, HSS, with a unified data repository, UDR. The subscription data repository is a repository of subscriber information, which can be used to record, define and service a number of network functions for each subscriber to a given MPN. Each MPN has an associated subscription data repository.

The commands are instructions or prompts for reconfiguring or managing aspects of an MPN, including configuring or managing SIMs connected to an MPN. The commands, when executed, apply the management instructions input by a user. After translation by the microservices module, the one or more core network type-specific command directed to a subscription data repository may be for implementation of the user instructions at the subscription data repository. For instance, the core network type-specific commands may change the network settings, roaming preferences, authentication settings and/or other routing rules for one or more subscriber in the subscription data repository associated with a destination MPN. Typically, each generic command comprises a predefined structure and complies with a predefined data model, which can be translated by the microservices module to a structure and data model required by the particular core network type of the destination MPN. The data structure and/or predefined data model of the generic commands may have more available combinations or options than the data structure or data model of any one particular core network type-specific command. In this way, the user interface at the management portal is agnostic to the specific core network type of the destination MPN being managed.

The one or more generic command may be one or more generic Application Programming Interface, API, call or one or more Command Line Interface, CLI, call, and the one or more core network type-specific command is one or more core network type-specific API call or one or more core network type-specific CLI call. An API call is one of a set of standard software functions an application can use to provide an interface between the application and the resources in the device. Each of the one or more core network type-specific API call may be a RESTful API call (conforming to REpresentational State Transfer (REST) principles). RESTful APIs communicate through Hypertext Transfer Protocol (HTTP) requests to perform standard database functions like creating, reading, updating and deleting records.

The type of core network may be dependent on one or more of: the vendor of the core network ("the core network vendor"); the software version running at the core network; and/or the technology type of the core network. The core network vendor may be considered as the original provider of the core network (for example, Nokia^{RTM}, Ericsson^{RTM} etc.). The technology type of the core network may be LTE/5G/6G, for instance. Different MPN of the plurality of MPN may be implemented on a different core-network type, and so the presently disclosed system allows for more straightforward management across the various MPN. Different implementations of MPN are possible, including dedicated MPN, hybrid MPN (with public and private network core components), shared radio access network (RAN) MPN, network slice MPN, and partner network MPN (service management overlay). The system and method disclosed herein could be applied to any of these different implementations.

The microservices module configured to translate the one or more generic command to one or more core network type-specific command may comprise the microservices module configured to:
identify a type of core network on which the destination MPN is implemented; and
convert the one or more generic command to one or more core network type-specific command by reference to an adapter of a set of adapters, each adapter of the set of adapters comprising a library of core network type-specific commands for communication with a type of core network, the adapter referenced being associated with the identified type of core network on which the destination MPN is implemented, and the one or more core network type-specific command for providing at the destination MPN a functionality commanded by the one or more generic command. In other words, the adapters each represent a library or dictionary to allow translation or interpretation of a generic command to a core network-type specific command for a given core network type. The system may further comprise an adapter database storing the set of adapters, the adapter database being part of or in communication with the microservices module.

Identifying a type of core network on which the destination MPN is implemented may comprise the microservices module configured to:
locate in a database of MPN and associated types of core network, an identifier for the destination MPN received from the management portal based on input by the user; and
retrieve from the database the type of core network associated with the destination MPN. In other words, the microservices module may consult a look-up table or database to identify the core network type on which a destination MPN is implemented. The system may further comprise a MPN database being the database (or look-up table) of MPN and associated types of core network, the MPN database being part of or in communication with the microservices module.

The management portal may comprise a cloud-based portal for receiving the input from the user for management of a destination MPN. The management portal may be configured for management of all MPN of the plurality of MPN, so as to provide a single point of entry or receipt for management instructions to each MPN. In this way, management is consolidated for all the plurality of MPN.

The input for management of a destination MPN may comprise instructions for provisioning of SIMs deployed at the destination MPN. Provisioning of SIMs may include activating, configuring and managing SIMs deployed on a given MPN. More specifically, provisioning of SIMs may include managing access of a particular subscriber to the MPN, authentication of a SIM on the MPN, or managing billing for a particular subscriber.

The destination MPN may be a first destination MPN, wherein the one or more core network type-specific command may be a first set of one or more core network type-specific command, and wherein the input may be for management of both the first destination MPN and a second destination MPN of the one or more mobile private networks, MPNs, the microservices module may be further configured to:
translate the one or more generic command to a second set of one or more core network type-specific command, the second set of one or more core network type-specific command being compatible with a type of core network on which the second destination MPN is implemented;
direct the second set of one or more core network type-specific command to a subscription data repository of the at least one subscription data repository, the subscription data repository being a subscription data repository associated with the second destination MPN.

In other words, the same set of instructions input by a user may be applied to two or more of the plurality of MPN, even though the two or more MPN are not implemented on the same core network-type. For instance, the system may generate generic commands from the user instructions, which can be translated into core network-type specific commands for each of the core-network types on which the first and second destination MPN are implemented. As such, the system allows for consolidated management of the plurality of MPN, increasing efficiency and ease.

The microservices module may further comprise a generic command gateway through which the one or more generic command is received by the microservices module; and/or the system further comprises a core network-type specific gateway through which the one or more core network type-specific command is directed from the microservices module towards the subscription data repository associated with a destination MPN. The generic command gateway may be considered a 'northbound' gateway, through which the generic commands pass from the management portal to the microservices module. The core network-type specific gateway may be considered a 'southbound' gateway, through which the core network-type specific commands are passed form the microservices module towards the subscription data repository and the destination MPN. Here, 'north' and 'south' are used to indicate a position with respect to the microservices module, rather than a direction of travel for commands through the system.

The microservices module may further comprise a set of backend services. The system may further comprise a cloud-based inventory for receiving and/or storing and/or aggregating information from different MPNs. Information stored in the inventory, for example, may include: user access data, SIM records, MPN services configuration, site information, MPN components information, collected network/radio key performance indicators (KPIs), assurance data generated during MPN service utilization, data network name (DNN), quality of service (QoS), user audit information and network/radio key performance indicators (KPIs). The information stored in the inventory may be useful for data backup in disaster recovery situations, to give better performance collecting data across different MPNs and also to provide the possibility for aggregated data across different MPNs.

Metrics (for instance across different MPNs) and information obtained via the cloud-based inventory may be shown to a user via a user interface at the management portal. Consolidated metrics may be obtained for all the MPN managed through a single management portal. Other backend services include authentication key management, customer management, site management and SIM history recordation. The described system may further allow for a centralized universal access method (UAM) across different MPNs. This provides for a centralised access for each managed MPN.

In a second aspect there is a method for management of one or more mobile private networks, MPNs, each MPN implemented on a type of core network, the method comprising:
receiving, at a microservices module from a management portal, one or more generic command generated according to input from a user at the management portal, the input for management of a destination MPN of the one or more mobile private networks, MPNs;
translating, at the microservices module, the one or more generic command to one or more core network type-specific command, the one or more core network type-specific command being compatible with a type of core network on which the destination MPN is implemented; and
directing the one or more core network type-specific command to a subscription data repository of the at least one subscription data repository, the subscription data repository being a subscription data repository associated with the destination MPN.

Each of the definitions and benefits described above with respect to features of the system also apply to like features of the method. As with the above-described system, the method for management of one or more MPNs allows the management of MPN without specific knowledge by the user of the core-network type, and also allows management of multiple MPNs according to a single set of input management instructions that is agnostic to core-network type. This reduces the complexity and increases the efficiency of management of a plurality of MPNs. The input for management of a destination MPN may comprise instructions for provisioning of SIMs deployed at the destination MPN.

The type of core network may be dependent on one or more of: the vendor of the core network; the software version running at the core network; and/or the technology type of the core network.

Translating the one or more generic command to one or more core network type-specific command may comprise:
identifying a type of core network on which the destination MPN is implemented; and
converting the one or more generic command to one or more core network type-specific command by reference to an adapter of a set of adapters, each adapter of the set of adapters comprising a library of core network type-specific commands for communication with a type of core network, the adapter referenced being associated with the identified type of core network on which the destination MPN is implemented, and the one or more core network type-specific command for providing at the destination MPN a functionality commanded by the one or more generic command.

Identifying a type of core network on which the destination MPN is implemented may comprise:
locating in a database of MPN and associated types of core network, an identifier for the destination MPN received from the management portal based on input by the user; and
retrieving from the database the type of core network associated with the destination MPN.

The destination MPN may be a first destination MPN, wherein the one or more core network type-specific command may be a first set of one or more core network type-specific command, and wherein the input may be for management of both the first destination MPN and a second destination MPN of the one or more mobile private networks, MPNs. The method may further comprise:
translating the one or more generic command to a second set of one or more core network type-specific command, the second set of one or more core network type-specific command being compatible with a type of core network on which the second destination MPN is implemented;
direct the second set of one or more core network type-specific command to a subscription data repository of the at least one subscription data repository, the subscription data repository being a subscription data repository associated with the second destination MPN.

In a third aspect there a computer program comprising instructions that, when executed on a processor, cause the processor to perform the method described above.

### Brief description of the figures

The disclosure may be put into practice in various ways, some of which will now be described by way of example only and with reference to the accompanying drawings in which:
FIGURE 1 shows a schematic diagram of the components of the system for management of a plurality of mobile private network (MPNs);
FIGURE 2 shows a flow diagram for the method of management of a plurality of MPNs;
FIGURE 3 shows a more detailed diagram of the components of the system for management of a plurality of MPNs;
FIGURE 4 shows an overview of the platform architecture layers of the system for management of a plurality of MPN, which is more detailed that the high-level diagram of FIGURE 3.

It will be understood that like features are labelled using like reference numerals. The figures are not to scale.

### Detailed description of specific examples

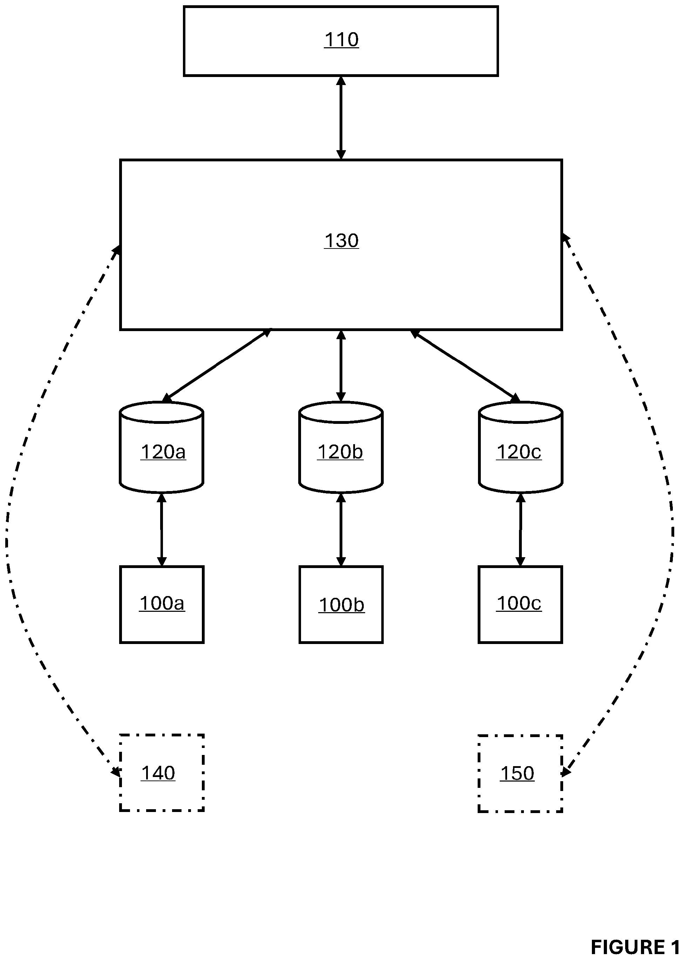

Referring to FIGURE 1, there is a system for management of a plurality of mobile private network (MPNs) 100a, 100b, 100c where each MPN is implemented on a type of core network. The type of core network is determined by the vendor of a given core network, the software version running on a given core network, and/or the technology type (4G/5G/6G) of the given core network. The system of FIGURE 1 further comprises a management portal 110 (which may be cloud-based or web-based), a plurality of subscription data repositories 120a, 120b, 120c (which here are implemented as a Home Subscriber Server (HSS) with a unified data repository (UDR)), and a microservices module 130.

The microservices module 130 is configured to receive one or more generic commands from the management portal 110. The one or more generic commands are commands or prompts generated at the management portal 110 according to an input (being a management instruction) from a user. The input may be received at a user interface of the management portal 110. The management portal 110 may be web-based and/or cloud-based. The management instruction is an instruction for management of one or more MPN of the plurality of the MPN 100a, 100b, 100c. For instance, instructions may include the provisioning of SIMs deployed at the destination MPN 100a, 100b, 100c.

The microservices module 130 translates the one or more generic command to one or more network type-specific command. In particular, network type-specific commands are those compatible with or interpretable by the core network type on which the destination MPN 100a, 100b, 100c is implemented. In other words, the microservices module 130 establishes one or more command that is compatible with the core network type of the destination MPN 100a, 100b, 100c, in order to implement the function requested by the one or more generic command received from the management portal 110 and based on the input by the user.

The microservices module 130 directs the one or more network type-specific command to the subscription data repository 120a, 120b, 120c associated with the destination MPN 100a, 100b, 100c. In particular, the one or more network type-specific command can be directed by the microservices module to an HSS of the destination MPN 100a, 100b, 100c. The one or more network type-specific command can then be implemented at the destination MPN.

To translate the one or more generic commands to one or more network type-specific command, the microservices module consults a set of adapters. The adapters are stored at an adapter database 140, which may be local to, or may be remote from but in communication with, the microservices module. In particular, the microservices module identifies the type of core network on which the destination MPN is implemented and then converts the one or more generic command to one or more core network type-specific command by reference to the adapter specific to the type of core network, wherein the adapter is retrieved from the set of adapters stored at the adapter database 140.

Each adapter of the set of adapters provides a library of core network type-specific commands for communication with the associated type of core network. Each core network type-specific command is associated at the adapter with one or more generic command, such that the network type-specific commands provide the same functionality as the associated one or more generic command. In this way, by consultation with the appropriate adapter, the microservices module translates the one or more generic command to one or more network type-specific command, in order to allow the network type-specific commands to be passed to each subscription data repository (and subsequently to be implemented at the associated MPN).

In order to retrieve the appropriate adapter, the microservices module identifies the core network type of the destination MPN by receiving, as part of the input by the user, an identifier of the destination MPN. The microservices module then uses the identifier to obtain from a database the type of core network on which the destination MPN is implemented. For instance, the microservices module may locate the MPN identifier in a database 150 of MPN and then retrieve from the database the type of core network recorded in the database as begin associated with the MPN having that identifier. The database 150 of MPN may be the same database or a separate database compared to the adapter database 140, and again the database 150 of MPN may be local to the microservices module, or may be remote from but in communication with, the microservices module.

The system of the present disclosure allows for centralised management of two or more MPN via a single set of management instructions input at the management portal. In particular, the system allows a single set of management instructions to be translated to different sets of core network type-specific commands as required according to the different destination MPN. More specifically, the microservices module may be configured to translate the one or more generic command to a first set of core network type-specific commands that are compatible with the core network type of a first destination MPN, whilst also translating the one or more generic command to a second set of core network type-specific commands that are compatible with the core network type of a second destination MPN. Each set of core network type-specific commands can then be directed from the microservices module toward each subscriber data repository associated with the appropriate first and second destination MPN.

The generic commands and the core network type-specific commands may each be Application Programming Interface (API) calls, or Client Line Interface (CLI) calls. The API or CLI calls comply with rules for communication between different software systems, in order to allow communication across various applications. In some cases, the core network type-specific commands may comprise a set of RESTful APIs to allow management of SIMs. RESTful APIs are APIs that follow a Representational State Transfer (REST) architecture and provide an interface to exchange information securely and follow secure, reliable, and efficient software communication standards. The Representational State Transfer (REST) architecture includes requirements including a uniform interface (i.e. a standard format) for commands.

In some cases, the one or more generic command may be received by the microservices module from the management portal via a gateway (being a northbound gateway or generic command gateway). The one or more core network type-specific command may also be passed to the subscription data repository via a gateway (being a southbound gateway or core network type-specific command gateway).

The microservices module and/or a plurality of other modules providing MPN services (which may be other microservice modules) may further be used to receive, store or aggregate information from different MPN. In this way, the microservices module (and/or other modules) may compile or populate a cloud-based inventory of information on the various MPN. From the inventory, the microservices module (and/or other modules) may generate various metrics associated with each MPN. These metrics may be displayed at a user interface at the management portal, to provide a consolidated view of information relating to all of the different MPN being managed via the system.

The system disclosed therefore provides a system for management of the MPNs that is agnostic to the core network type requirements. It does this by using generic data models that abstract the user input data so as to be indifferent to the core network type (including core network vendor and core network technology). As a result, the system is able to provide a single point of user input for management of multiple MPN, which may each be implemented on a different type of core network. The system may also provide a user interface able to provide consolidated views of statistics and metrics for the various MPN being managed via the central management portal.

The benefits provided by the disclosed system may include increased efficiency of management, as there is less duplication in order to implement the same change across multiple different MPN. Management may be carried out without specific knowledge of the core network-type requirements, and so permit owners of MPNs to manage the networks themselves, without the requirement for implementation of changes by the original vendor of the core network of a given MPN. Furthermore, security is enhanced, as there can be a greater traceability of operations and changes applied to each MPN via the central management portal. Finally, the disclosed system offers improved fault tolerance, as a result of a validation process as a consequence of the translation of generic commands to core network type-specific commands.

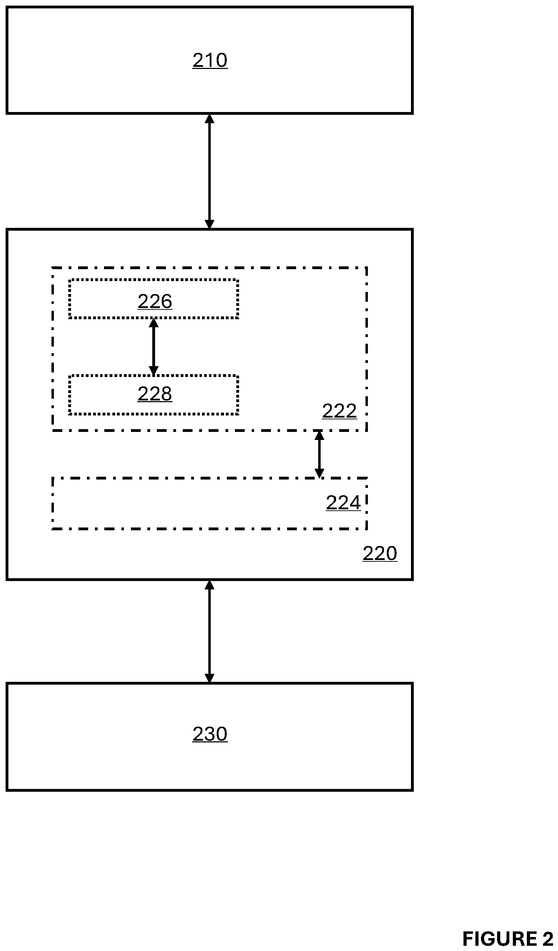

FIGURE 2 shows the steps of a method for management of one or more mobile private networks, MPNs, as carried out by the system above. In particular, the method comprises a first step 210, in which the microservices module receives one or more generic command from a management portal. The generic commands are generated according to input from a user at the management portal, wherein the input is instructions from the user for management of a destination MPN.

In a second step 220, the microservices module translates the one or more generic command to one or more network type-specific command. The one or more core network type-specific command is compatible with a type of core network on which the destination MPN is implemented. In some cases, the translating step 220 comprises identifying 222 the type of core network on which the destination MPN is implemented, and then converting 224 the one or more generic command to one or more core network type-specific command by reference to an adapter of a set of adapters. The adapters may each provide a library of core network type-specific commands for communication with a type of core network. A particular adapter to be used in the translation step may be selected from a database of adapters each associated with a particular core-network type. Identifying 222 a type of core network on which the destination MPN is implemented may involve locating 226 an identifier for the destination MPN in a database of MPN and retrieving 228 the associated type of core network. The database may take the form of a look-up table. The identifier may be received at the microservices module from the management portal, having formed part of the input by the user.

In a final step 230 of the method, the microservices module directs the one or more core network type-specific command towards the destination MPN, and more specifically to a subscription data repository (such as an HSS) associated with the destination MPN. The one or more core network type-specific command can then be implemented at the given destination MPN.

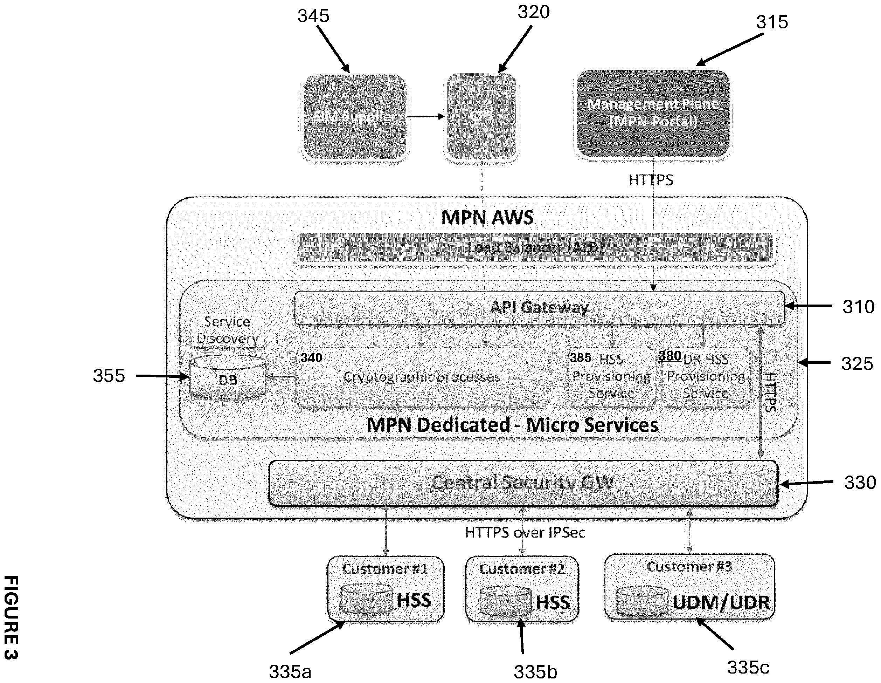

FIGURE 3 depicts the high-level architecture of a specific example according to the disclosure. The present disclosure is directed to the implementation of the MPN dedicated microservices module 325 shown in FIGURE 3.

A key function provided by the microservices module 325 is the "southbound" service. An API Gateway 310 exposes a set of standard APIs (in other words, generic commands) to the management portal 315, and passes to the microservices module 325 any standard APIs (in other words, generic commands discussed above with reference to FIGURE 1 and 2) received from the management portal 315. An HSS provisioning service 385 of the microservices module 325 is responsible for translating the standard API calls (in other words, generic commands) received via the API Gateway 310 to the customer's MPN specific API calls (in other words, the core network type-specific commands appropriate to the core network type of the destination MPN discussed above with reference to FIGURE 1 and 2, which specifically may be RESTful APIs). The HSS provisioning service 385 obtains the relevant southbound API calls (in other words, the appropriate core network type-specific commands) using a stored adapter, the appropriate adapter being selected based on the contextual information obtained such as customer information, site information, core network-type etc. As part of the southbound service, the microservices module interfaces with an internal or external Central Security Gateway and or firewall 330 to facilitate secure connectivity of core network type-specific API calls (in particular, being the core network type-specific commands) to a subscription data repository relevant to the destination MPN. The subscription data repositories of FIGURE 3 are shown as an HSS 335a, 335b or UDM/UDR 335c. Each HSS 335a, 335b or UDM/UDR 335c of FIGURE 3 is part of a different MPN core network, wherein each different MPN core network exposes an associated set of RESTful APIs (being core network type-specific commands) to allow the management of the given MPN core network (including provisioning and management of SIMs at the given MPN).

Where a different core network type is deployed at a new MPN to be managed, then an appropriate adapter for translation of the commands can be developed to translate the standard API calls (in other words, generic commands) to the new core network type-specific commands, whilst the rest of the system may remain the same. In this way, the disclosed system and method allows management of a new core network type to be implemented easily by the straightforward development of suitable adapters for translation between generic commands and the core network type-specific commands, with minimal coding and whilst reusing existing code as much as possible.

It will be understood that SIM provisioning is an important part of a mobile network, which allows for activating, configuring and managing of SIM cards. To configure the primary cellular routing and carriers of a given SIM, the SIM needs to be activated and configured with a network operator's settings before it can be used. The process also includes configuring a SIM card with network settings, such as data plan and roaming preferences. Secure SIM provisioning requires authentication key settings to be stored on a SIM card device and to prevent unauthorised access or tampering. SIM provisioning at different MPN is now discussed below, with reference to FIGURE 3.

After a new batch order of SIMs has been processed and manufactured by a SIM manufacturer or supplier 345, a SIM return file is uploaded into a CFS server 320 for provisioning of the new SIMs at a destination MPN. A return file ingestion service at the microservices module 325 will periodically poll the CFS server 320 to check for new SIM return files. When a new return file is detected, then a SIM provisioning process is triggered.

In particular, a detected new SIM return file is ingested and decrypted at a cryptographic processes component 340 of the microservices module. The return file consists of a list of SIM records, each SIM record including at least the SIM identifier (IMSI) and the SIM encrypted key information. The SIM record is then used to trigger provisioning of each SIM to a customer HSS. The microservices module 325 obtains from a customer database 355 various customer context information such as the customer and product details associated with the customer site (and specific MPN and MPN core network type) to which a given SIM is mapped. This is then used in order to call (in other words, generate and invoke) core network type-specific commands (here being core network type-specific API calls) for provisioning or re-provisioning the new SIM within the relevant subscription data repository (e.g. HSS 335a, 335b, UDM/UDR 335c, etc.) for management of a destination MPN.

A further service provided at the microservices module 325 is a Disaster Recovery (DR) HSS Provisioning Service 380. The disaster recovery provisioning service 380 enables a re-initialization provisioning of specific SIM, SIM range(s) or SIM batch orders to an associated customer HSS.

In view of the above, SIM provisioning may make use of a set of standard SIM provisioning and SIM life cycle management APIs (being sets of generic commands as described herein). The standard provisioning API function provides an abstracted integration layer to the upstream platforms to enable MPN customers to logon to the management portal and perform MPN SIM provisioning and SIM life cycle management activities on the customer specific SIMs. The microservices module will receive from the management portal the generic commands (e.g. the standard provisioning APIs) that are independent of the underlying core network platform which may vary by:
- the core network vendor (i.e. Athonet, Nokia, Huawei, etc)
- the technology type of the core network (or core vendor product technology, i.e. 5GNSA, 5GSA, NB-loT, etc)
- the software version running at the core network (or core vendor product technology API version, i.e. API v1, v2, etc)

The microservices module is responsible for authenticating the generic commands received via the management portal, validating the user's instructions and supplied attributes and then performing the necessary operations to translate the generic commands to the core network type-specific (e.g. southbound API calls) to be directed to the destination MPN.

Other services provided by the described microservices module include a notification service, which listens for notifications and relays these to the management portal. In addition, the microservices module may provide monitoring, including status monitoring and traceability of all components to MPN OSS tools (e.g. FluentD, ElasticSearch, Kibana, Prometheus, Grafana, CloudWatch). All statistics and metrics for services via the microservices module (including availability, performance, and usage whether successes or failures, requests latency, timeouts etc) can be logged (for instance in a cloud-based inventory for receiving and/or storing and/or aggregating information from different MPNs).

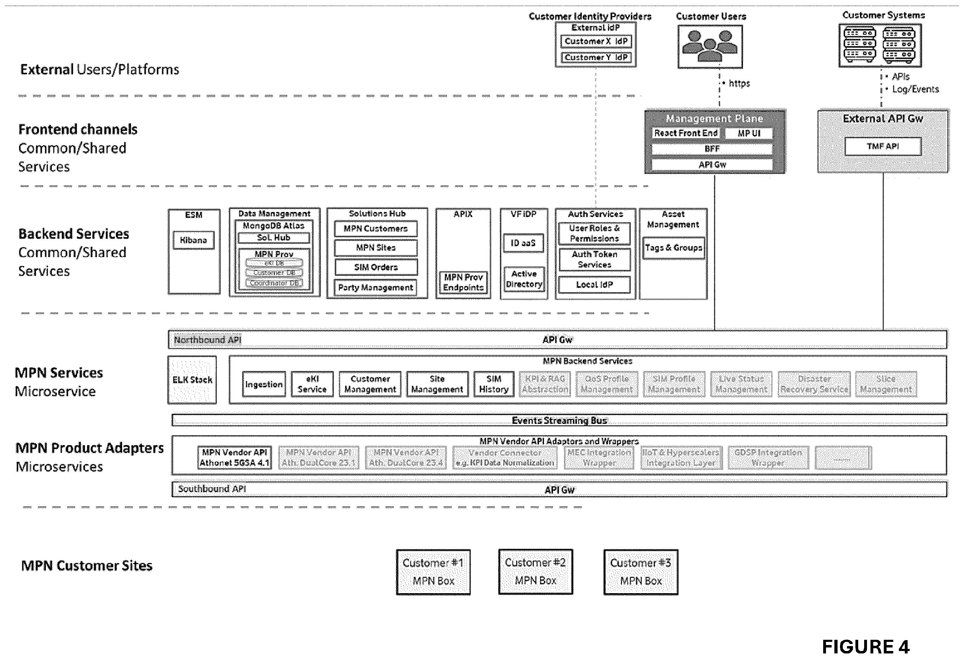

FIGURE 4 shows an overview of the platform's architecture layers, having more detail that the high-level diagram of FIGURE 3. FIGURE 4 illustrates how the layers such as Common/Shared services, frontend channels, and MPN Customer Platforms interact with the MPN backend microservices. Here the management portal is marked as the management plane, and the microservices module is shown as the 'MPN Services (microservices)'. The MPN Product Adapters, which are used for translation of the generic commands to the core network type-specific commands, are also shown. Two gateways (marked as API Gw in FIGURE 4) are shown, wherein a first gateway (northbound) is arranged between the management portal (or management plane) and the microservices module, and a second gateway (southbound) is arranged between the microservices module and the destination (or customer) MPNs. Also shown are the backend services, which would include authentication and population of an inventory of metrics related to each MPN.

The following advantages apply to the system according to the present disclosure:
1. The system provides a specific adapter to translate generic commands to network core type-specific commands for each type of core network. This makes the system easier to maintain and scale as and when new MPN to be managed are added having a different core network type.
2. The microservices module can be moved from one runtime environment to another with little effort. Adaptation to a different environment (e.g. customer hosted instead of cloud hosted) can be achieved via simple configurability.
3. The microservices module has its own data storage mechanism, and the system ensures that data relating to different MPN is only shared through the management portal.
4. All management activities for the MPN can be logged, traced and attributed to a particular user, thereby improving security, facilitating trouble shooting and improving error reversal.

Please note that although the examples and terminology discussed herein relate to 4G or 5GNSA, the solution is designed to be agnostic to the core network vendor and technology, and also supports 5GSA. Furthermore, it should be noted that the database 355 represented in FIGURE 3 is shown as a consolidated database for simplicity, but various databases referred to within the present disclosure may be separate databases.

Although examples according to the disclosure have been described with reference to specific illustrative examples, other approaches according to the disclosure may be used. Certain features may be omitted or substituted, for example as indicated herein. Each feature disclosed in this specification, unless stated otherwise, may be replaced by alternative features serving the same, equivalent or similar purpose. Thus, unless stated otherwise, each feature disclosed is one example only of a generic series of equivalent or similar features.

In this detailed description of the various examples and/or embodiments, for the purposes of explanation, numerous specific details are set forth to provide a thorough understanding of the examples and/or embodiments disclosed. One skilled in the art will appreciate, however, that these various examples and/or embodiments may be practiced with or without these specific details. Furthermore, one skilled in the art can readily appreciate that the specific sequences in which methods are presented and performed are illustrative and it is contemplated that the sequences can be varied and still remain within the scope of the various examples and/or embodiments disclosed herein.

As used herein, including in the claims, unless the context indicates otherwise, singular forms of terms are to be construed as including the plural form and vice versa. For instance, unless the context indicates otherwise, a singular reference herein including in the claims, such as "a" or "an" means "one or more". Throughout the description and claims of this disclosure, the words "comprise", "including", "having" and "contain" and variations of the words, for example "comprising" and "comprises" or similar, mean "including but not limited to", and are not intended to (and do not) exclude other components. Also, the use of "or" is inclusive, such that the phrase "A or B" is true when "A" is true, "B" is true, or both "A" and "B" are true.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

The terms "first" and "second" may be reversed without changing the scope of the disclosure. That is, the terms are relative such that an element termed a "first" element or position may instead be termed a "second" element or position and an element termed a "second" element or position may instead be considered a "first" element or position.

Any steps described in this specification may be performed in any order or simultaneously unless stated or the context requires otherwise. Moreover, where a step is described as being performed after another step, this does not preclude intervening steps being performed.

It is also to be understood that, for any given component, example or embodiment described herein, any of the possible candidates or alternatives listed for that component may generally be used individually or in combination with one another, unless implicitly or explicitly understood or stated otherwise. It will be understood that any list of such candidates or alternatives is merely illustrative and not limiting, unless implicitly or explicitly understood or stated otherwise.

### Glossary of acronyms

- API: Application Programming Interfaces
- AWS: Amazon Web Services
- CFS: Corporate File Transfer Service
- DB: Data Base
- DR: Disaster Recovery
- eKi: Encrypted KI
- EPC: Evolved Packet Core
- HSS: Home Subscriber Server
- IMSI: International Mobile Subscriber Identity
- loT: Internet of Things
- KMS: Key Management Service
- LTE: Long-term Evolution (4G)
- MEC: Multi-access Edge Computing
- MPN: Mobile Private Network
- MSISDN: Mobile Station Integrated Services Digital Network
- NSA: Non-Stand Alone
- OSS: Operations Support System
- QoS: Quality of Service
- RAN: Radio Access Network
- SA: Stand Alone
- SIM: Subscriber Identity Module
- SIM Return: File Encrypted File with a set of SIM located on CFS ready to be processed
- TLS: Transport Layer Security
- USIM: Universal Subscriber Identity Module

## Claims

1. A system for management of one or more mobile private networks, MPNs, each MPN implemented on a type of core network, the system comprising:
a management portal;
at least one subscription data repository wherein each subscription data repository is associated with a MPN of the one or more mobile private networks, MPNs; and
a microservices module, in communication with the management portal and the at least one subscription data repository;
wherein the microservices module is configured to:
receive from the management portal one or more generic command generated according to input from a user at the management portal, the input for management of a destination MPN of the one or more mobile private networks, MPNs;
translate the one or more generic command to one or more core network type-specific command, the one or more core network type-specific command being compatible with a type of core network on which the destination MPN is implemented;
direct the one or more core network type-specific command to a subscription data repository of the at least one subscription data repository, the subscription data repository being a subscription data repository associated with the destination MPN.

2. The system of claim 1, wherein the type of core network is dependent on one or more of:
the vendor of the core network;
the software version running at the core network; and/or
the technology type of the core network.

3. The system of any preceding claim, wherein the microservices module configured to translate the one or more generic command to one or more core network type-specific command comprises the microservices module configured to:
identify a type of core network on which the destination MPN is implemented; and
convert the one or more generic command to one or more core network type-specific command by reference to an adapter of a set of adapters, each adapter of the set of adapters comprising a library of core network type-specific commands for communication with a type of core network, the adapter referenced being associated with the identified type of core network on which the destination MPN is implemented, and the one or more core network type-specific command for providing at the destination MPN a functionality commanded by the one or more generic command.

4. The system of claim 3, wherein the microservices module configured to identify a type of core network on which the destination MPN is implemented comprises the microservices module configured to:
locate in a database of MPN and associated types of core network, an identifier for the destination MPN received from the management portal based on input by the user; and
retrieve from the database the type of core network associated with the destination MPN.

5. The system of claim 4, further comprising a MPN database being the database of MPN and associated types of core network, the MPN database being part of or in communication with the microservices module.

6. The system of any one of claims 3 to 5, further comprising an adapter database storing the set of adapters, the adapter database being part of or in communication with the microservices module.

7. The system of any preceding claim, wherein the management portal comprises a cloud-based portal for receiving the input from the user for management of a destination MPN.

8. The system of any preceding claim, wherein the input for management of a destination MPN comprises instructions for provisioning of SIMs deployed at the destination MPN.

9. The system of any preceding claim, wherein the destination MPN is a first destination MPN, wherein the one or more core network type-specific command is a first set of one or more core network type-specific command, and wherein the input is for management of the first destination MPN and a second destination MPN of the one or more mobile private networks, MPNs, the microservices module is further configured to:
translate the one or more generic command to a second set of one or more core network type-specific command, the second set of one or more core network type-specific command being compatible with a type of core network on which the second destination MPN is implemented;
direct the second set of one or more core network type-specific command to a subscription data repository of the at least one subscription data repository, the subscription data repository being a subscription data repository associated with the second destination MPN.

10. The system of any preceding claim, wherein the microservices module further comprises a generic command gateway through which the one or more generic command is received by the microservices module; and/or
the system further comprises a core network-type specific gateway through which the one or more core network type-specific command is directed from the microservices module towards the subscription data repository associated with a destination MPN.

11. The system of any preceding claim, further comprising a cloud-based inventory for receiving and/or storing and/or aggregating information from different MPNs.

12. A method for management of one or more mobile private networks, MPNs, each MPN implemented on a type of core network, the method comprising:
receiving, at a microservices module from a management portal, one or more generic command generated according to input from a user at the management portal, the input for management of a destination MPN of the one or more mobile private networks, MPNs;
translating, at the microservices module, the one or more generic command to one or more core network type-specific command, the one or more core network type-specific command being compatible with a type of core network on which the destination MPN is implemented; and
directing the one or more core network type-specific command to an subscription data repository of the at least one subscription data repository, the subscription data repository being a subscription data repository associated with the destination MPN.

13. The method of claim 12, wherein the type of core network is dependent on one or more of:
the vendor of the core network;
the software version running at the core network; and/or
the technology type of the core network.

14. The method of claim 12 or claim 13, wherein translating the one or more generic command to one or more core network type-specific command comprises:
identifying a type of core network on which the destination MPN is implemented; and
converting the one or more generic command to one or more core network type-specific command by reference to an adapter of a set of adapters, each adapter of the set of adapters comprising a library of core network type-specific commands for communication with a type of core network, the adapter referenced being associated with the identified type of core network on which the destination MPN is implemented, and the one or more core network type-specific command for providing at the destination MPN a functionality commanded by the one or more generic command.

15. The method of claim 14, wherein identifying a type of core network on which the destination MPN is implemented comprises:
locating in a database of MPN and associated types of core network, an identifier for the destination MPN received from the management portal based on input by the user; and
retrieving from the database the type of core network associated with the destination MPN.
